# EUROPEAN PATENT APPLICATION

(11) **EP 2 961 236 A1**
(43) Date of publication of application: **30.12.2015**
(21) Application number: 15173896.0
(22) Date of filing: 25.06.2015
(51) Int. Cl.: H04W 76/04, H04W 16/14, H04W 52/02

(54) **METHOD AND APPARATUS FOR COOPERATION BETWEEN USER EQUIPMENT (UE) AND SERVING CELL IN A WIRELESS COMMUNICATION SYSTEM**

(30) Priority: 27.06.2014 US 201462018127 P
(71) Applicant: Innovative Sonic Corporation, Taipei City 11491 (TW)
(72) Inventor: Guo, Yu-Hsuan, 11491 Taipei City (TW)
(74) Representative: Hoefer & Partner Patentanwälte mbB

(57) **Abstract**

A method and apparatus are disclosed for cooperation between UE and serving cell in a wireless communication system. In one embodiment, the method includes the UE receiving an indication of deactivating a cell via broadcast or multicast (1005). The method also includes the UE deactivating the cell based on the indication (1010).

## Description

### CROSS-REFERENCE TO RELATED APPLICATIONS

The present Application claims the benefit of U.S. Provisional Patent Application Serial No. 62/018,127 filed on June 27, 2014, the entire disclosure of which is incorporated herein by reference.

### FIELD

This disclosure generally relates to wireless communication networks, and more particularly, to a method and apparatus for cooperation between UE and serving cell in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus are disclosed for cooperation between UE and serving cell in a wireless communication system herein and are defined in independent claims 1, 3, 4, 6 and 11, respectively. The respective dependent claims define preferred embodiments thereof, respectively. In one embodiment, the method includes the UE receiving an indication of deactivating a cell via broadcast or multicast. This method also includes the UE deactivating the cell based on the indication.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of a figure in 3GPP RWS-140004.
FIG. 6 is a diagram according to one exemplary embodiment.
FIG. 7 is a diagram according to one exemplary embodiment.
FIG. 8 is a diagram according to one exemplary embodiment.
FIG. 9 is a flow chart according to one exemplary embodiment.
FIG. 10 is a flow chart according to one exemplary embodiment.
FIG. 11 is a flow chart according to one exemplary embodiment.
FIG. 12 is a diagram according to one exemplary embodiment.
FIG. 13 is a diagram according to one exemplary embodiment.
FIG. 14 is a diagram according to one exemplary embodiment.
FIG. 15 is a flow chart according to one exemplary embodiment.
FIG. 16 is a flow chart according to one exemplary embodiment.
FIG. 17 is a flow chart according to one exemplary embodiment.
FIG. 18 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: RWS-140029, "Chairman Summary"; RWS-140020, "Use Cases & Scenarios for Licensed Assisted Access"; RWS-140004, "CableLabs Perspectives on LTE-U Coexistence with Wi-Fi and Operational Modes for LTE-U"; RWS-140010, "Requirements and Coexistence Topics for LTE-U"; RWS-140024, "KDDI Proposals on Technology Requirement Clarification"; RWS-140006, "A look at the requirements for LTE in the Unlicensed Bands"; RWS-140005, "Scenarios, spectrum considerations and preliminary assessment results of U-LTE"; RWS-140025, "Co-existence considerations for LTE-U"; RWS-140026, "Views on LAA for Unlicensed Spectrum - Scenarios and Initial Evaluation Results"; RWS-140002, "LTE in Unlicensed Spectrum: European Regulation and Co-existence Considerations"; RWS-140012, "LTE operation in unlicensed spectrum"; TS 36.331 V12.1.0, "E-UTRA RRC protocol specification"; and 3GPP TS 36.321 V12.1.0, "E-UTRA MAC protocol specification". The standards and documents listed above are hereby expressly incorporated by reference in their entirety.

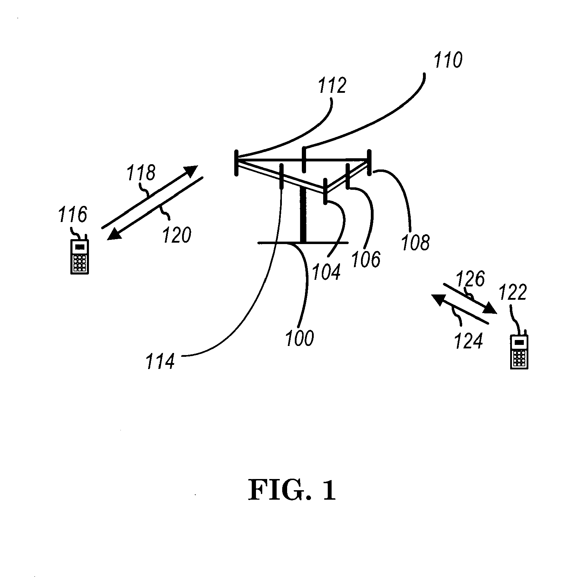

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology like network node. An access terminal (AT) may also be called user equipment (UE), a wireless communication device, terminal, access terminal or some other terminology.

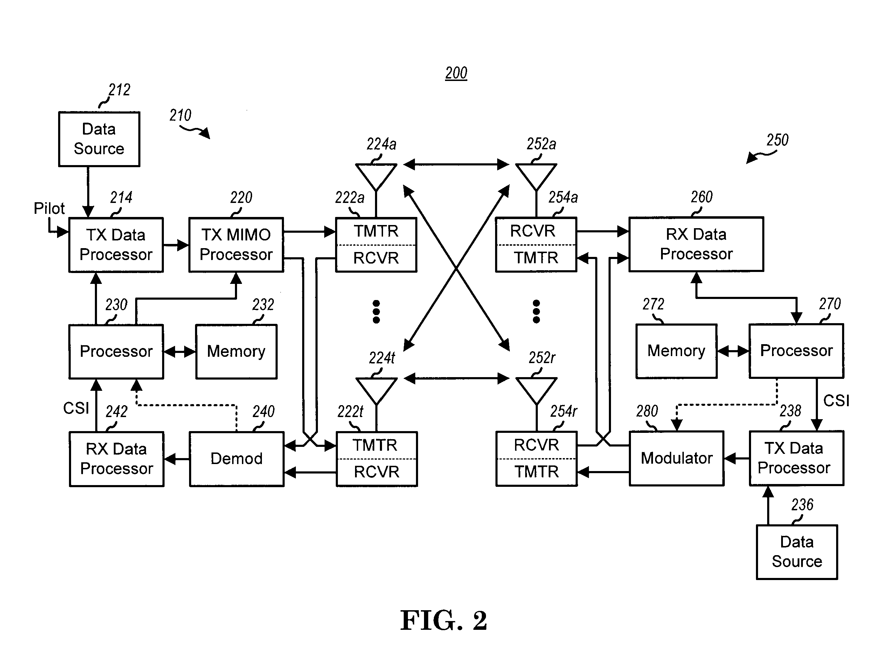

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

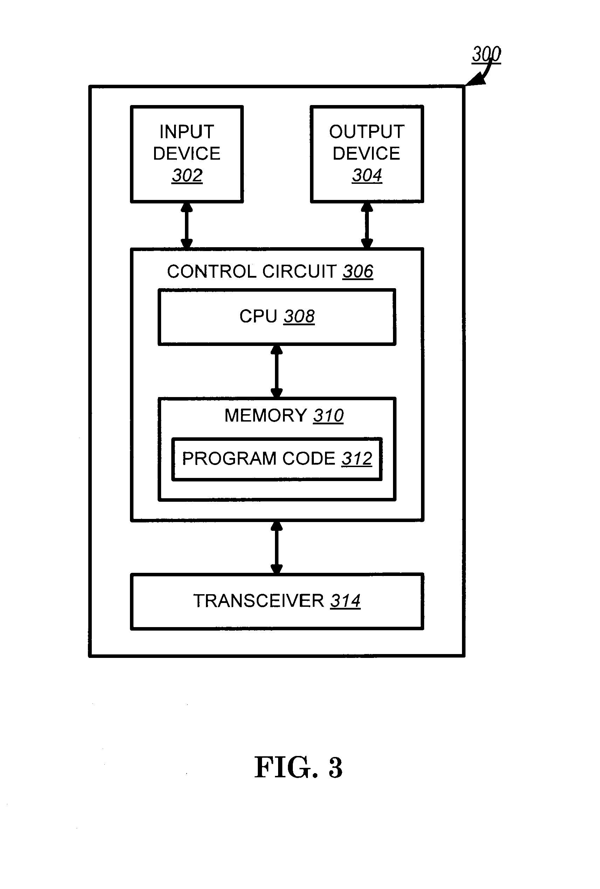

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

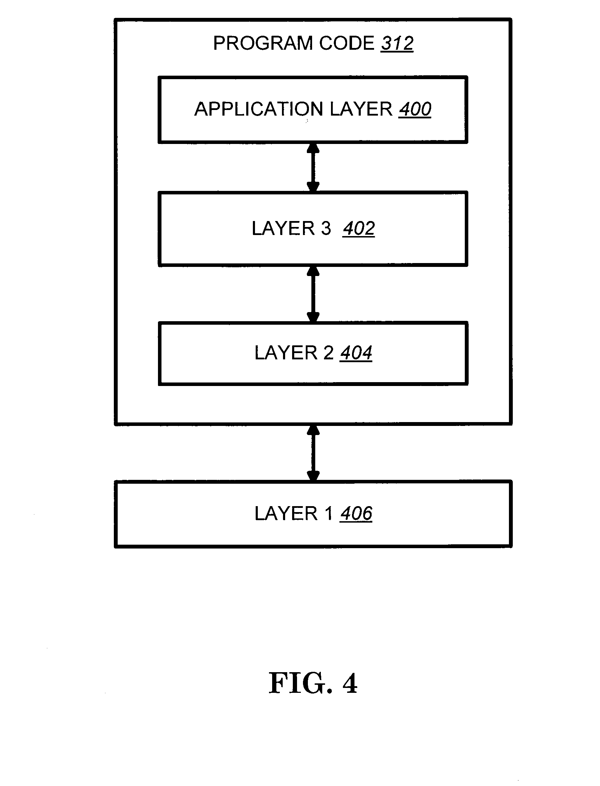

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

A 3GPP workshop on LTE in unlicensed spectrum (e.g., called LTE-U) was held as summarized in 3GPP RWS-140029. In general, the motivation to introduce this feature is because the traffic demand increases rapidly year by year. Opportunistic use of unlicensed spectrum will be an important complement to meet future traffic demand. This new feature could be an attractive option for operators to utilize unlicensed spectrum with a unified network. In addition, the feature could offer potential operational cost saving, improved spectral efficiency, and/or better user experience.

It would be preferable to standardize a global solution that could address the regulatory requirements of different regions. According to an analysis of regulations in different regions, unlicensed operation in 5 GHz may be the primary focus. Several radio technologies already operate in 5 GHz (e.g., WiFi 802.11a, 802.11n, 802.11ac, etc.).

Possible deployment models and their corresponding operations are summarized in the table below and discussed in 3GPP RWS-140029.

| Deployment model | Mode of operation | |
|---|---|---|
| Co-located cells | Licensed-Assisted | Carrier Aggregation |
| Non co-located cells w/ ideal backhaul | | |
| Non co-located cells w/out ideal backhaul | | Dual Connectivity |
| Standalone cells | Standalone | |

There are strong interests in both indoor and outdoor deployments. Furthermore, Licensed-Assisted Carrier Aggregation operation(s) may further be divided into two options: (1) DL only and (2) both DL and UL. The operation(s) may first focus on DL only, and then follow with both DL and UL. It is also considered valuable to study Licensed-Assisted Dual Connectivity, but the preference is to do so at later time. There is no consensus on the support of standalone operation.

Regarding Licensed-Assisted Access (LAA), 3GPP RWS-140020 proposes that Primary Carrier always uses licensed spectrum (either FDD or TDD) for control signalling, mobility, or user data. Furthermore, only Secondary Carrier(s) would use unlicensed spectrum for best-effort user data.

To introduce LTE in unlicensed spectrum, the following issues have been identified:
- Coexistence with WiFi
   ▪ LTE and WiFi networks must receive equal access to the unlicensed band (as discussed in 3GPP RWS-140004).
- Coexistence among cells from the same or different operators
- In-device coexistence
   ▪ Client must support simultaneous LTE-U and Wi-Fi operations in the same band (as discussed in 3GPP RWS-140004).
   ▪ UE needs to prevent transmission of WiFi from blocking reception of LTE in unlicensed spectrum (as discussed in 3GPP RWS-140010).

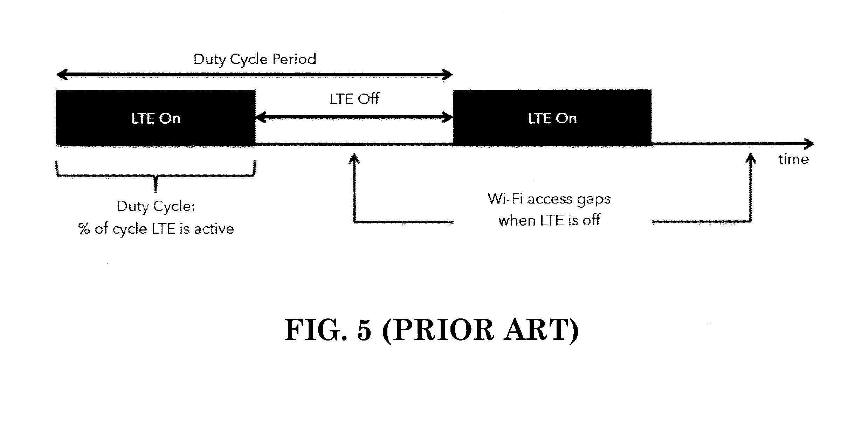

Furthermore, the following possible enhancements/solutions have been identified:
- Listen-Before-Talk (LBT)
   ▪ Both CSMA/CA (Carrier Sense Multiple Access with Collision Avoidance) and CCA (Clear Channel Assessment) should be included for fairness (as discussed in 3GPP RWS-140024).
      ◆ CSMA/CA in WLAN (Wireless Local Area Network) can be considered as a starting point (e.g., formula of back-off time, etc.)
      ◆ CCA is used to detect/confirm the wireless channel assessment. First, study whether or not energy-detection CCA is sufficient for detecting WLAN channel assessment. If the energy-detection CCA is demonstrated to be not sufficient, signal-detection CCA should be applied to detect WLAN channel assessment.
- Duty cycle as shown in FIG. 5, which is a reproduction of a figure in 3GPP RWS-140004
- Transmit Power Control (TPC) (as discussed in 3GPP RWS-140006)
   ▪ TPC feature adjusts a transmitter's output power based on the signal level present at the receiver. As the signal level at the receiver rises or falls, the transmit power will decrease or increase as needed.
- Carrier selection
   ▪ Random Carrier Selection (as discussed in 3GPP RWS-140005)
   ▪ Channel-sensing based Carrier selection: each LTE node selects one interference-less unlicensed carrier (as discussed in 3GPP RWS-140005).
   ▪ Dynamic Frequency Selection (DFS) (as discussed in 3GPP RWS-140006)
      ◆ Detects the presence of radar signals and dynamically guides a transmitter to switch to another channel whenever a particular condition (indicating a conflict with an active radar operation) is met. Prior to the start of any transmission, an Unlicensed National Information Infrastructure (U-NII) device equipped with DFS capability must continually monitor the radio.
   ▪ Remote sensing mechanism for optimized channel selection (as discussed in 3GPP RWS-140010)
- Information exchange and management (as discussed in 3GPP RWS-140010)
   ▪ Geo-location information of WiFi access points and LTE eNBs in unlicensed spectrum
   ▪ AP and eNB channel allocation statistics
   ▪ Interference characteristics based on calculation and measurements
- Backoff mechanisms (as discussed in 3GPP RWS-140025)
   ▪ So far, Wi-Fi with random backoff has shown to be a fair and efficient way for several nodes and technologies to access an unlicensed channel. Since the first 802.11 amendments, Wi-Fi has used random backoff (while detecting collisions) to guarantee a fair and efficient sharing across Wi-Fi and non-Wi-Fi nodes. We strongly recommend LTE-Unlicensed to consider random backoff mechanism during channel access and statistically larger random backoff when "collisions" are detected during medium access.
- Reuse or improve current mechanisms
   ▪ ICIC (Inter-Cell Interference Control) or CoMP (Coordinated Multi Point) operation as discussed in 3GPP RWS-140026
   ▪ CQI (Channel Quality Indicator) as discussed in 3GPP RWS-140002
   ▪ Small cell on/off, cross-carrier scheduling, TDD-FDD CA (Time Division Duplex - Frequency Division Duplex Carrier Aggregation), or Dynamic TDD (eIMTA) as discussed in 3GPP RWS-RWS-140012

Since there are more than thirty companies showing interest on LTE in unlicensed spectrum during the workshop, it is expected that a corresponding (RAN1-led) study item would be started soon and a solution would be completed in LTE Rel-13.

In order to coexist with other LTE cells and other radio technologies in the same unlicensed spectrum for fairness, services provided by a LTE cell in the unlicensed spectrum may be interrupted or suspended occasionally. The interruption or suspension and the length of the interruption or suspension may be predictable (e.g., if duty cycle is used) or not predictable (e.g., if LBT - "Listen-Before-Talk", carrier selection, or backoff is used). Since services provided by the cell are interrupted or suspended for a while, if the UEs served by the cell (e.g., aggregating the cell as a SCell - "Secondary Cell") still operate normally (e.g., monitor corresponding PDCCH), UE power would be consumed unnecessarily. Enhancements on UE power saving mechanism (e.g., for the interruption case) should be considered in different aspects.

### I. Aspect 1

Because SCell deconfiguration/configuration (as discussed in 3GPP TS 36.331 V12.1.0) would cause more signaling overhead and delay, a SCell can be activated or deactivated (e.g., explicitly by an Activation/Deactivation MAC Control Element or implicitly by *sCellDeactivationTimer*) (as discussed in 3GPP TS 36.321 V12.1.0) for power saving. Details of activation/deactivation of SCells can be found in section 5.13 of [13]. Using the MAC Control Element to deactivate a SCell may come for free because normally the SCell is deactivated if there would be no more transmission for a while. In that case, the last transmission may possibly include MAC padding.

When a SCell is deactivated, part or all of following behaviors would be applied (as discussed in 3GPP TS 36.331 V12.1.0):
- stop the *sCellDeactivationTimer* associated with the SCell;
- flush all HARQ buffers associated with the SCell;
- not transmit SRS on the SCell;
- not report CQI/PMI/RI/PTI for the SCell;
- not transmit on UL-SCH on the SCell;
- not transmit on RACH on the SCell;
- not monitor the PDCCH on the SCell;
- not monitor the PDCCH for the SCell.

However, since the interruption or suspension mentioned above would affect most or all of UEs served by the cell (repeatedly), signaling overhead caused by Activation/Deactivation MAC (Medium Access Control) Control Elements becomes significant and not for free. In addition, the Activation/Deactivation MAC Control Element may not be successfully received by the UE due to interference or collision (e.g., HARQ (Hybrid Automatic Repeat Request) retransmission of the MAC Control Element falls into LTE off period).

So, the following options of the invention are proposed:
- Network could provide an indication of a period (e.g., a service interruption period or normal service period) associated with a cell to a UE. Then, the UE would activate and/or deactivate the cell autonomously based on at least the period. The period is not related to *sCellDeactivationTimer* (e.g., not impacted by the reception of an uplink grant or downlink assignment).
- Network could provide an indication of deactivating a cell to more than one UE via broadcast or multicast. Then, the UE would deactivate the cell based on the indication.

More specifically, the period could be associated with a LTE off period (e.g., during a duty cycle period), a LTE on period (e.g., during the duty cycle period), a backoff period (e.g., waiting for next opportunity to use a specific carrier), a time for carrier (or frequency) switching of the cell, a time for collision detection and/or avoidance, a time that the cell can serve the UE (e.g. DL transmission is allowed), or a time that the cell cannot serve the UE (e.g. DL transmission is not allowed).

In addition, the indication could be provided in a RRC message (such as a RRC Connection Reconfiguration message) discussed in 3GPP TS 36.331 V12.1.0, in system information discussed in as discussed in 3GPP TS 36.331 V12.1.0, in a paging message discussed in 3GPP TS 36.331 V12.1.0, or in a MAC Control Element which is used to activate and/or deactivate serving cell(s).

Furthermore, common DRX (Discontinuous Reception) operation (e.g., only one set of DRX timers discussed in 3GPP TS 36.321 V12.1.0) could be used for PCell (discussed in 3GPP TS 36.331 V12.1.0) and the cell of the UE. Alternatively, independent DRX operations (e.g., independent sets of DRX timers) could be used for PCell and the cell of the UE.

Also, the UE could activate and/or deactivate the cell autonomously based on the previous activation/deactivation status of the cell. For example, if the cell is explicitly deactivated by the MAC Control Element, the UE will not autonomously activate the cell.

In addition, the network is eNB (evolved Node B). The cell is a SCell (discussed in 3GPP TS 36.331 V12.1.0) of the UE. The cell operates in unlicensed spectrum.

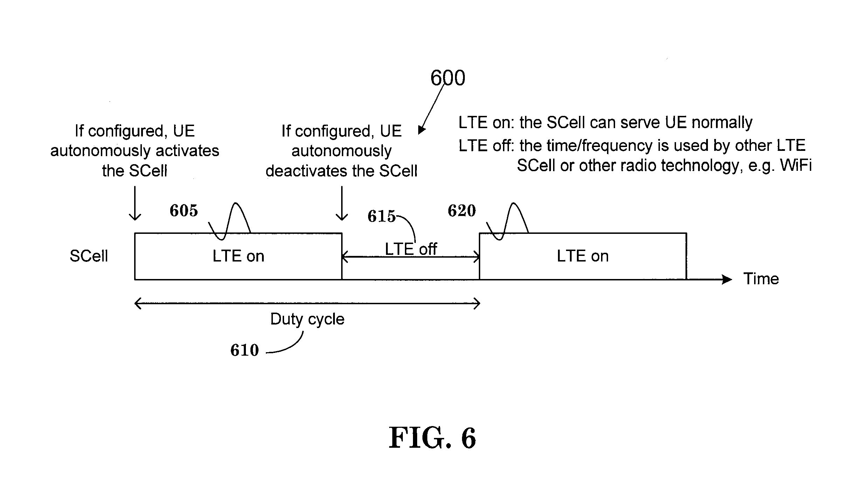

FIGS. 6 through 11 illustrate various exemplary embodiments. In particular, FIG. 6 is a diagram 600 in accordance with one exemplary embodiment. As shown in FIG. 6, if configured, the UE would autonomously activate the SCell at the beginning of the LTE on period 605 of the duty cycle 610, and would autonomously deactivate the SCell at the end of the LTE on period 605 or at the beginning of the LTE off period 615 of the duty cycle 610. In general, the SCell could serve the UE normally during the LTE on period 605 or 620. During the LTE off period 615, the time or frequency could be used by other LTE SCells, or other radio technologies (such as WiFi).

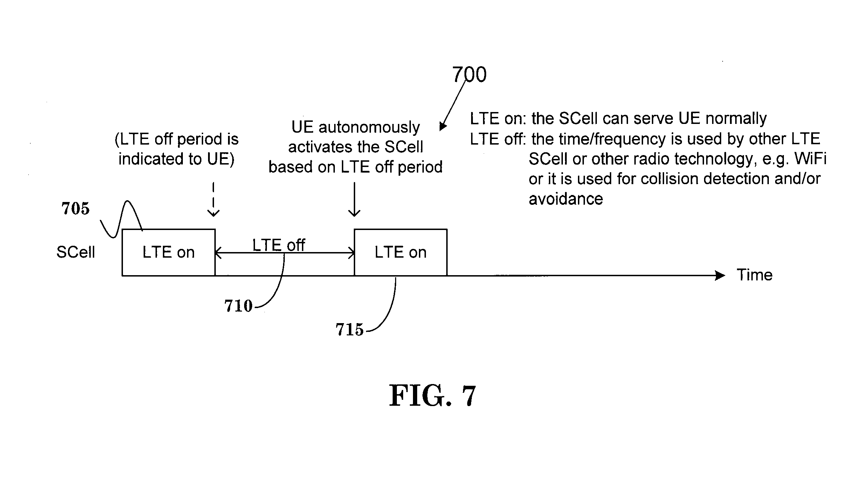

FIG. 7 is a diagram 700 in accordance with one exemplary embodiment. As shown in FIG. 7, the LTE off period 710 is indicated to the UE. The UE would autonomously activate the SCell based on the LTE off period 710. During the LTE on period 705 or 715, the SCell would serve the UE normally. During the LTE off period 710, the time or frequency could be used by other LTE SCells, other radio technologies (such as WiFi), or collision detection and/or avoidance.

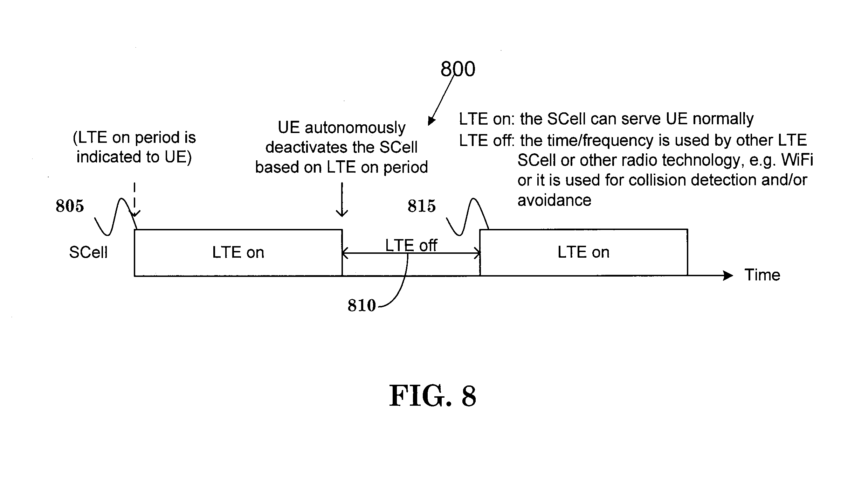

FIG. 8 is a diagram 800 in accordance with one exemplary embodiment. As shown in FIG. 8, the LTE on period 805 is indicated to the UE. The UE would autonomously deactivate the SCell based on the LTE on period 805. During the LTE on period 805 or 815, the SCell would serve the UE normally. During the LTE off period 810, the time or frequency could be used by other LTE SCells, other radio technologies (such as WiFi), or collision detection and/or avoidance.

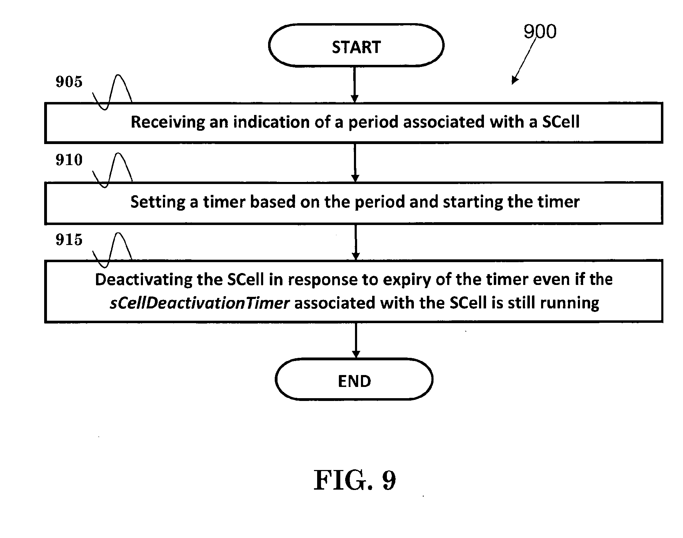

FIG. 9 is a flow chart 900 from the perspective of the UE in accordance with one exemplary embodiment. In step 905, the UE receives an indication of a period associated with a SCell. In step 910, the UE sets a timer based on the period, and starts the timer. In step 915, the UE deactivates the SCell in response to the expiry of the timer even if the *sCellDeactivationTimer* associated with the SCell is still running.

Referring back to FIGS. 3 and 4, the device 300 includes a program code 312 stored in memory 310 of a UE. The CPU 308 could execute program code 312 to enable the UE (i) to receive an indication of a period associated with a SCell, (ii) to set a timer based on the period, and to start the timer, and (iii) to deactivate the SCell in response to the expiry of the timer even if the *sCellDeactivationTimer* associated with the SCell is still running. In addition, the CPU 308 can execute the program code 312 to perform all of the above-described actions and steps or others described herein, in particular those described in paragraphs [0055] to [0064] above.

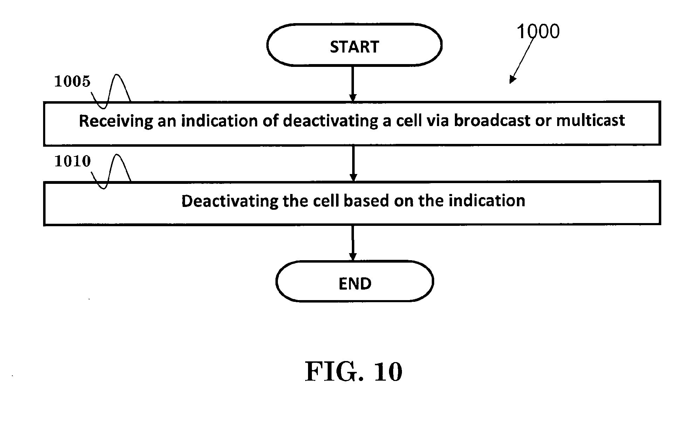

FIG. 10 is a flow chart 1000 from a UE's perspective in accordance with one exemplary embodiment. In step 1005, the UE receives an indication of deactivating a cell via broadcast or multicast. In step 1010, the UE deactivates the cell based on the indication. In one embodiment, the UE deactivates the cell upon receiving the indication.

Referring back to FIGS. 3 and 4, the device 300 includes a program code 312 stored in memory 310 of a UE. The CPU 308 could execute program code 312 to enable the UE (i) to receive an indication of deactivating a cell via broadcast or multicast, and (ii) to deactivate the cell based on the indication. In addition, the CPU 308 could execute the program code 312 to perform all of the above-described actions and steps or others described herein, in particular those described in paragraphs [0054] to [0060] and [0066] above.

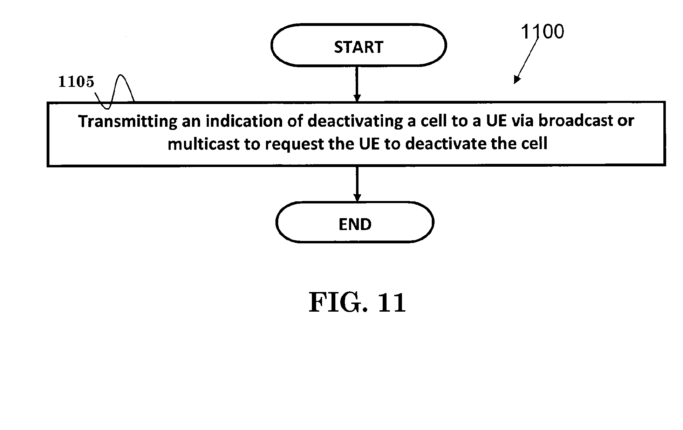

FIG. 11 is a flow chart 1100 from the perspective of a network node in accordance with one exemplary embodiment. In step 1105, the network node transmits an indication of deactivating a cell to a plurality of UEs via broadcast or multicast to request the plurality of UEs to deactivate the cell. In one embodiment, the UE deactivates the cell upon receiving the indication.

Referring back to FIGS. 3 and 4, the device 300 includes a program code 312 stored in memory 310 of a network node. The CPU 308 could execute program code 312 to enable the network node to transmit an indication of deactivating a cell to a plurality of UEs via broadcast or multicast to request the plurality of UEs to deactivate the cell. In addition, the CPU 308 could execute the program code 312 to perform all of the above-described actions and steps or others described herein, in particular those described in paragraphs [0054] to [0060] and [0068] above.

In any of above embodiments, the cell could be a SCell of the UE or a LTE cell. Furthermore, the UE could be configured with DRX functionality. The indication could include an identification of the cell, or an identification of a cell group that includes the cell. Furthermore, the indication could include an offset and/or a length. A common DRX operation could be used for the cell and a PCell of the UE. For example, an *onDurationTimer* for both the cell and the PCell. Alternatively, independent DRX operations are used for the cell and a PCell of the UE. For example, one *onDurationTimer* for the cell and another *onDurationTimer* for the PCell.

### II. Aspect 2

DRX is generally another functionality used to control the UE's PDCCH monitoring activity for power saving as discussed in 3GPP TS 36.321 V12.1.0. If DRX is configured, the UE would be allowed to monitor the PDCCH discontinuously. Additional detail of DRX functionality can be found in Section 5.7 of 3GPP TS 36.321 V12.1.0. When a DRX cycle is configured, the UE could monitor the PDCCH during the Active Time. As discussed in 3GPP TS 36.321 V12.1.0, Active Time includes the time under the following situations:
- *onDurationTimer* or *drx-InactivityTimer* or *drx-RetransmissionTimer* or *mac-ContentionResolutionTimer* is running; or
- a Scheduling Request is sent on PUCCH and is pending; or
- an uplink grant for a pending HARQ retransmission can occur and there is data in the corresponding HARQ buffer; or
- a PDCCH indicating a new transmission addressed to the C-RNTI of the UE has not been received after successful reception of a Random Access Response for the preamble not selected by the UE.

3GPP TS 36.321 V12.1.0 provides the following definitions:
- Active Time: Time related to DRX operation during which the UE monitors the PDCCH in PDCCH-subframes.
- *drx-InactivityTimer*: Specifies the number of consecutive PDCCH-subframe(s) after the subframe in which a PDCCH indicates an initial UL or DL user data transmission for this UE.
- *drx-RetransmissionTimer:* Specifies the maximum number of consecutive PDCCH-subframe(s) until a DL retransmission is received.
- *onDurationTimer:* Specifies the number of consecutive PDCCH-subframe(s) at the beginning of a DRX Cycle.

Active Time could be used to determine whether to monitor PDCCH, report type-0-triggered SRS, and/or report CQI/PMI/RI/PTI as described in 3GPP TS 36.321 V12.1.0. Type-0-triggered SRS and CQI/PMI/RI/PTI are only allowed to be reported during Active Time.

Furthermore, as discussed in 3GPP TS 36.321 V12.1.0, a DRX Command MAC Control Element or a Long DRX Command MAC Control Element could be used by network to stop *onDurationTimer* and *drx-InactivityTimer* in the UE. In other words, the MAC Control Element could ask the UE to leave the Active Time to save UE power.

However, since the interruption or suspension mentioned above would affect most or all of UEs served by the cell (repeatedly), perfect DRX configuration cannot be guaranteed for all affected UEs. In addition, length of one interruption or suspension may be longer than one DRX cycle, signaling overhead caused by DRX Command MAC Control Elements and Long DRX Command MAC Control Elements becomes significant. Moreover, the MAC Control Element may not be successfully received by the UE due to interference or collision (e.g. HARQ retransmission of the MAC Control Element falls into LTE off period).

So, the present invention proposes the following options:
- Network could provide an indication of a period (e.g., a service interruption period or normal service period) associated with a cell to a UE. Then, the UE would stop *onDurationTimer, drx-InactivityTimer,* and/or *drx-RetransmissionTimer* associated with the cell autonomously based on at least the period.
- Network could provide an indication of a period (e.g., a service interruption period or normal service period) associated with a cell to a UE. A corresponding Active Time would not include TTIs (Transmission Time Interval) associated with the period (e.g., controlled by a timer).
- Network could provide an indication of a period (e.g., a service interruption period or normal service period) associated with a cell to a UE. A corresponding Active Time would only include TTIs associated with the period (e.g., controlled by a timer).
- Network could provide an indication of stopping *onDurationTimer, drx-InactivityTimer,* and/or *drx-RetransmissionTimer* associated with a cell to more than one UE via broadcast or multicast. Then, the UE would stop *onDurationTimer, drx-InactivityTimer,* and/or *drx-RetransmissionTimer* associated with the cell based on the indication.

More specifically, the period could be associated with a LTE off period (e.g., during a duty cycle period), a LTE on period (e.g., during the duty cycle period), a backoff period (e.g., waiting for next opportunity to use a specific carrier), a time for carrier (or frequency) switching of the cell, a time for collision detection and/or avoidance, a time that the cell can serve the UE (e.g. DL transmission is allowed), or a time that the cell cannot serve the UE (e.g. DL transmission is not allowed).

In addition, the indication could be provided in a RRC message (e.g., a RRC Connection Reconfiguration message) discussed in 3GPP TS 36.331 V12.1.0, in system information discussed in 3GPP TS 36.331 V12.1.0, in a paging message discussed in 3GPP TS 36.331 V12.1.0, or in a MAC control element (e.g., which is used to stop *onDurationTimer* and *drx-InactivityTimer*).

Furthermore, independent DRX operations (e.g., independent sets of DRX timers) could be used for PCell and the cell of the UE.

Also, the UE could stop the timer (e.g., *onDurationTimer, drx-InactivityTimer,* and/or *drx-RetransmissionTimer*) corresponding to the period autonomously at the beginning of the period, at the end (or right after the end) of the period, or upon receiving the indication. In addition, the UE could start the timer at the beginning of the period, at the end (or right after the end) of the period, or upon receiving the indication.

In one embodiment, the period is not related to measurement gap configuration. Furthermore, the network could be an eNB, while the cell could be a SCell of the UE. In addition, the cell could operate in an unlicensed spectrum.

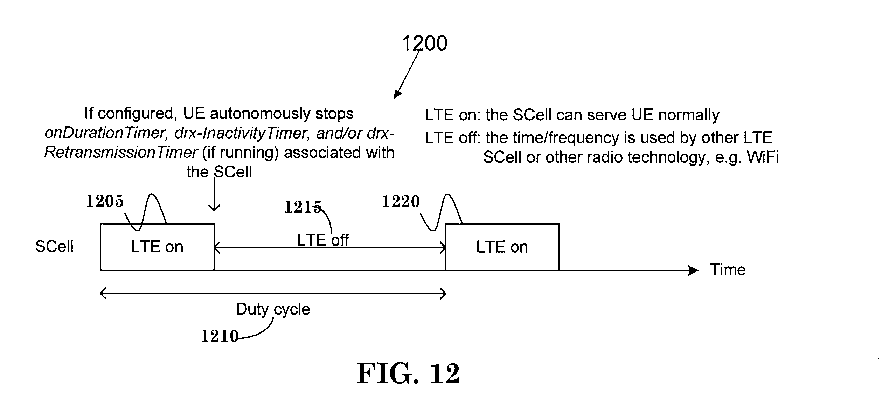

FIGS. 12 through 17 illustrate various exemplary embodiments. In particular, FIG. 12 is a diagram 1200 in accordance with one exemplary embodiment. As shown in FIG. 12, if configured, the UE would autonomously stop *onDurationTimer, drx-InactivityTimer,* and/or *drx-RetransmissionTimer* (if running) associate with the SCell at the end (or right after the end) of the LTE on period 1205 of the duty cycle 1210. Furthermore, during the LTE on period 1205 or 1220, the SCell could serve the UE normally. During the LTE off period 1215, the time (or frequency) could be used by other LTE SCell(s) or other radio technologies (such as WiFi).

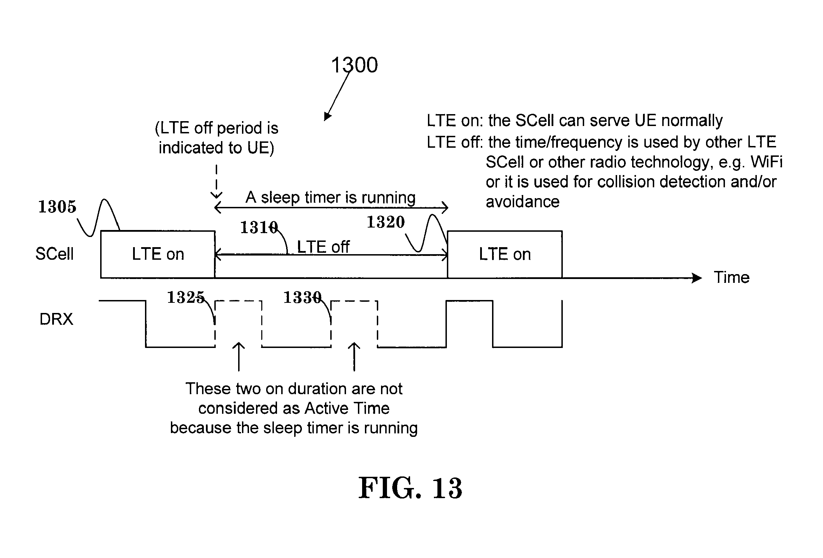

FIG. 13 is a diagram 1300 in accordance with one exemplary embodiment. As shown in FIG. 13, a LTE off period is indicated to the UE at the end (or right after the end) of the LTE on period 1305. A sleep timer would be started and run during the LTE off period 1320. The DRX on duration periods 1325 and 1330 that occur while the sleep timer runs are not considered to be Active Time because the sleep timer is running. During the LTE on period 1305 and 1320, the SCell could serve the UE normally. During the LTE off period 1310, the time (or frequency) could be used by other LTE SCell(s), other radio technologies (such as WiFi), or collision detection and/or avoidance.

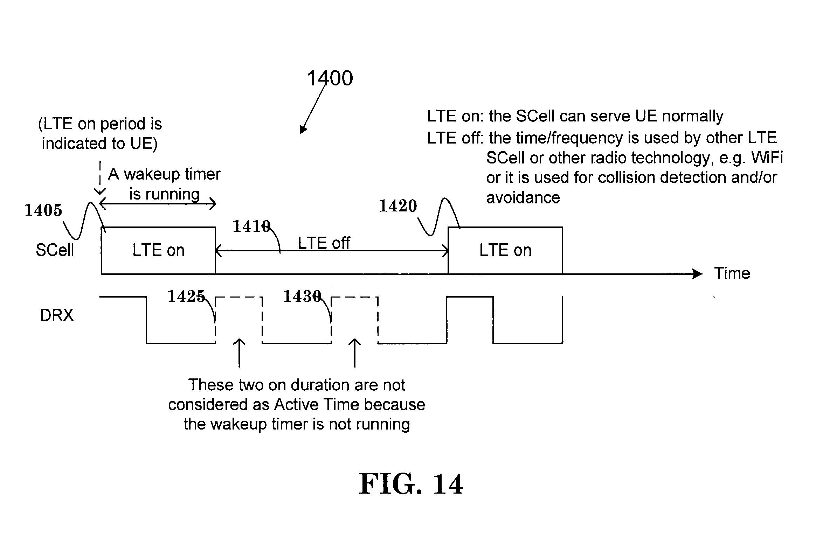

FIG. 14 is a diagram 1400 in accordance with one exemplary embodiment. As shown in FIG. 14, a LTE on period is indicated to the UE at the beginning of the LTE on period 1405. A wakeup timer would be started and run during the LTE on period 1405. The DRX on duration periods 1425 and 1430 are not considered to be Active Time because the wakeup timer is not running. During the LTE on period 1405 and 1420, the SCell could serve the UE normally. During the LTE off period 1410, the time (or frequency) could be used by other LTE SCell(s), other radio technologies (such as WiFi), or collision detection and/or avoidance.

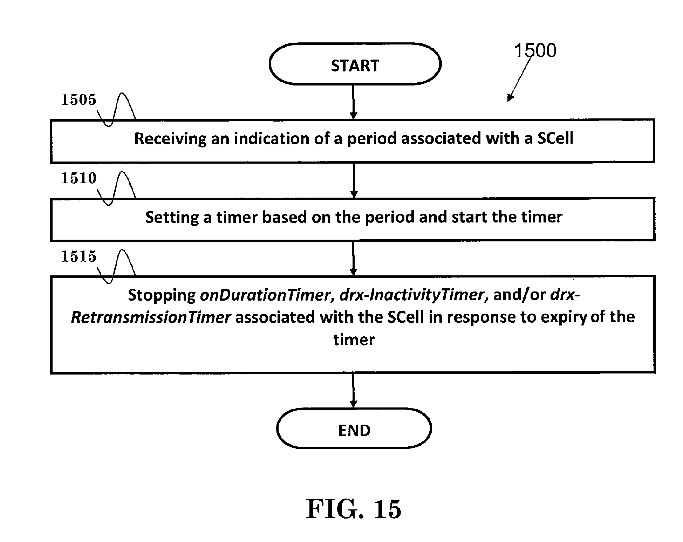

FIG. 15 is a flow chart 1500 from a UE's perspective in accordance with one exemplary embodiment. In step 1505, the UE receives an indication of a period associated with a SCell. In step 1510, the UE sets a timer based on the period, and starts the timer. In step 1515, the UE stops *onDurationTimer, drx-IrractivityTimer*, and/or *drx-RetransmissionTimer* associated with the SCell in response to the expiry of the timer.

Referring back to FIGS. 3 and 4, the device 300 includes a program code 312 stored in memory 310 of a UE. The CPU 308 could execute program code 312 to enable the UE (i) to receive an indication of a period associated with a SCell, (ii) to set a timer based on the period, and to start the timer, and/or (iii) to stop *onDurationTimer, drx-InactivityTimer,* and/or *drx-RetransmissionTimer* associated with the SCell in response to the expiry of the timer. In addition, the CPU 308 could execute the program code 312 to perform all of the above-described actions and steps or others described herein, in particular those described in paragraphs [0077] to [0086] above.

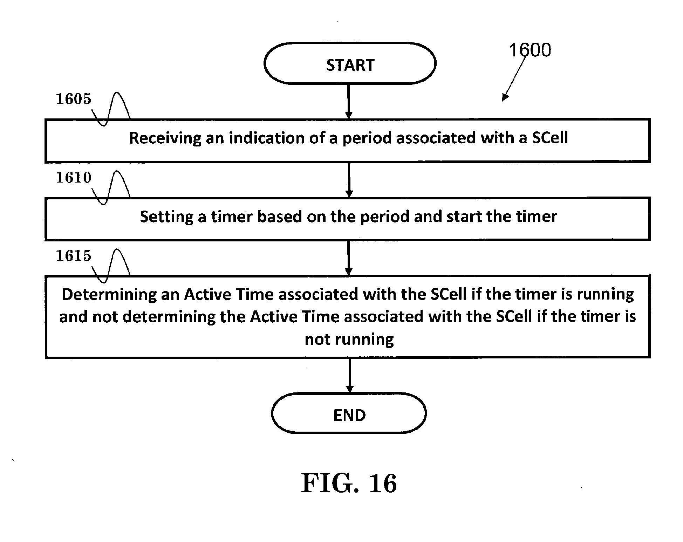

FIG. 16 is a flow chart 1600 from a UE's perspective in accordance with one exemplary embodiment. In step 1605, the UE receives an indication of a period associated with a SCell. In step 1510, the UE sets a timer based on the period, and starts the timer. In step 1515, the UE determines an Active Time associated with the SCell if the timer is running and not determine the Active Time associated with the SCell if the timer is not running.

Referring back to FIGS. 3 and 4, the device 300 includes a program code 312 stored in memory 310 of a UE. The CPU 308 could execute program code 312 to enable the UE (i) to receive an indication of a period associated with a SCell, (ii) to set a timer based on the period, and to start the timer, and/or (iii) to determine an Active Time associated with the SCell if the timer is running and not determine the Active Time associated with the SCell if the timer is not running. In addition, the CPU 308 could execute the program code 312 to perform all of the above-described actions and steps or others described herein, in particular those described in paragraphs [0077] to [0082] and [0088] above.

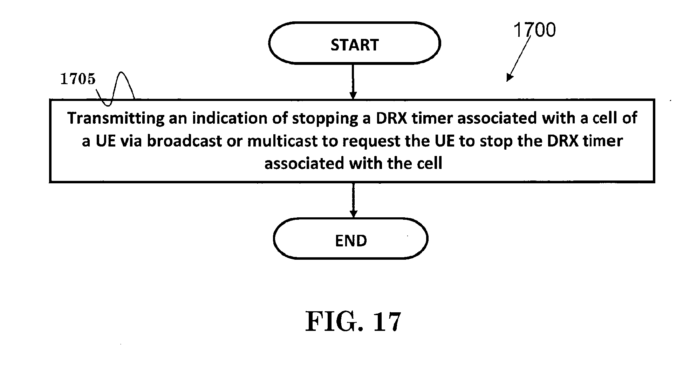

FIG. 17 is a flow chart 1700 from the perspective of a network node in accordance with one exemplary embodiment. In step 1005, the network node transmits an indication of stopping a DRX timer associated with a cell to a plurality of UEs via broadcast or multicast to request the plurality of UEs to stop the DRX timer associated with the cell. In one embodiment, the UE stops the DRX timer upon receiving the indication.

Referring back to FIGS. 3 and 4, the device 300 includes a program code 312 stored in memory 310 of a network node. The CPU 308 could execute program code 312 to enable the network node to transmit an indication of stopping a DRX timer associated with a cell to a plurality of UEs via broadcast or multicast to request the plurality UEs to stop the DRX timer associated with the cell. In addition, the CPU 308 could execute the program code 312 to perform all of the above-described actions and steps or others described herein, in particular those described in paragraphs [0077] to [0082] and [0090] above.

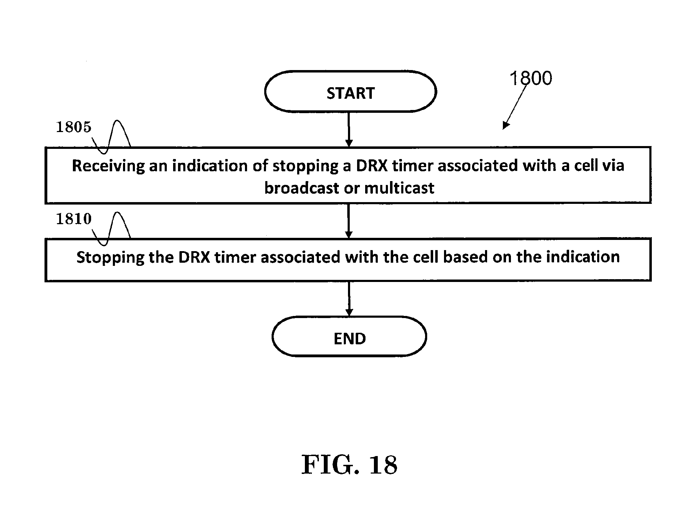

FIG. 18 is a flow chart 1800 from the perspective of a UE in accordance with one exemplary embodiment. In step 1805, the UE receives an indication of stopping a DRX timer associated with a cell via broadcast or multicast. In step 1810, the UE stops the DRX timer associated with the cell based on the indication. In one embodiment, the UE stops the DRX timer upon receiving the indication.

Referring back to FIGS. 3 and 4, the device 300 includes a program code 312 stored in memory 310 of a network node. The CPU 308 could execute program code 312 to enable the UE (i) to receive an indication of stopping a DRX timer associated with a cell via broadcast or multicast, (ii) to stop the DRX timer associated with the cell based on the indication. In addition, the CPU 308 could execute the program code 312 to perform all of the above-described actions and steps or others described herein, in particular those described in paragraphs [0077] to [0082] and [0092] above.

In any of above embodiments, the UE could be configured with DRX functionality. The DRX timer could be an *onDurationTimer*, a *drx-InactivityTimer,* or a *drx-RetransmissionTimer.* Furthermore, independent DRX operations could be used for the cell and a PCell of the UE, such as one *onDurationTimer* for the cell and another *onDurationTimer* for the PCell. The cell could be a SCell of the UE or a LTE cell. The indication could include an identification of the cell, or an identification of a cell group that includes the cell. Furthermore, the indication could include an offset and/or a length.

In any of above embodiments, length of the period is not integer multiple of *shortDRX-Cycle* (as discussed in 3GPP TS 36.321 V12.1.0) or *longDRX-Cycle* (as discussed in 3GPP TS 36.321 V12.1.0).

With above embodiment(s), signaling overhead can be reduced and UE power consumption can be improved in response to service interruption or suspension of a LTE cell in unlicensed spectrum.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways, in particular a system according to the invention preferably combines two or more of the embodiments of the invention in any suitable way. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method of a User Equipment, in the following also referred to as UE, comprising:
receiving an indication of deactivating a cell via broadcast or multicast (1005); and
deactivating the cell based on the indication (1010).

2. The method of claim 1, wherein the UE deactivates the cell upon receiving the indication.

3. A method of a network node, comprising:
transmitting an indication of deactivating a cell to a plurality of User Equipments, in the following also referred to as UEs, via broadcast or multicast to request the plurality of UEs to deactivate the cell (1100).

4. A method of a User Equipment, in the following also referred to as UE, comprising:
receiving an indication of stopping a DRX timer associated with a cell via broadcast or multicast (1805); and
stopping the DRX timer, which is running, associated with the cell based on the indication (1810).

5. The method of claim 4, wherein the UE stops the DRX timer upon receiving the indication.

6. A method of a network node, comprising:
transmitting an indication of stopping a DRX timer associated with a cell to a plurality of User Equipments, in the following also referred to as UEs, via broadcast or multicast to request the plurality of UEs to stop the DRX timer associated with the cell (1705).

7. The method of any one of claims 4 to 6, wherein the DRX timer is an *onDurationTimer,* a *drx-InactivityTimer,* or a *drx-RetransmissionTimer.*

8. The method of any one of the preceding claims, wherein the indication is provided in a Radio Resource Control, in the following also referred to as RRC, message, in particular a RRC Connection Reconfiguration message, a system information, a paging message, or a Media Access Control, in the following also referred to as MAC, Control Element.

9. The method of any one of the preceding claims, wherein the cell operates in an unlicensed spectrum.

10. The method of any one of the preceding claims, wherein the indication includes an identification of the cell, or an identification of a cell group that includes the cell.

11. A communication device (300), comprising:
a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to enable the communication device (300) to perform the method steps as defined in any one of claims 1 to 10.
